# EUROPÄISCHE PATENTSCHRIFT

(11) **EP 1 327 011 B1**
(45) Veröffentlichungstag und Bekanntmachung des Hinweises auf die Patenterteilung: **28.04.2004**
(21) Anmeldenummer: 01969697.0
(22) Anmeldetag: 06.09.2001
(51) Int. Cl.: C25B 1/30

(54) **VERFAHREN ZUR ELEKTROCHEMISCHEN HERSTELLUNG VON WASSERSTOFFPEROXID**
METHOD FOR ELECTROCHEMICALLY PRODUCING HYDROGEN PEROXIDE
PROCEDE DE PRODUCTION ELECTROCHIMIQUE DE PEROXYDE D'HYDROGENE

(30) Priorität: 26.09.2000 DE 10048030
(43) Veröffentlichungstag der Anmeldung: 16.07.2003
(73) Patentinhaber: Degussa AG, 40474 Düsseldorf (DE)
(72) Erfinder: LEHMANN, Thomas, 63505 Langenselbold (DE); STENNER, Patrik, 63452 Hanau (DE)
(86) Internationale Anmeldenummer: PCT/EP2001/010267
(87) Internationale Veröffentlichungsnummer: WO 2002/027071

(56) Entgegenhaltungen:
- WO-A-97/13006

## Beschreibung

Die Erfindung betrifft ein Verfahren zur elektrochemischen Herstellung von Wasserstoffperoxid in einer Elektrolysezelle, deren Aufbau im wesentlichen jenem einer Brennstoffzelle analog ist.

Es ist bekannt, Wasserstoffperoxid nach dem sogenannten Anthrachinon-Kreisprozess herzustellen. Dieses großtechnisch genutzte Verfahren hat den Nachteil, dass das produzierte Wasserstoffperoxid einerseits auf eine Konzentration im Bereich von meistens 50 bis 70 Gew.-% aufkonzentriert werden muss und andererseits dass der Transport solcher Lösungen zum Ort der Verwendung aufwendig ist. Da ohnehin in vielen Einsatzgebieten für Wasserstoffperoxid nur verdünnte Lösungen zur Anwendung gelangen, besteht ein reges Interesse daran, Wasserstoffperoxid on-site herzustellen. Gleichzeitig ist in vielen Anwendungsfällen von Interesse, Wasserstoffperoxid ohne das Erfordernis einer Vorrichtung für die Lagerung eines höher konzentrierten Wasserstoffperoxids auf Bedarf herzustellen und unmittelbar der Verwendung zuzuführen.

Um Wasserstoffperoxid on-site und on-demand verfügbar zu machen, gewinnen elektrochemische Prozesse erneut Interesse. Die meisten der derzeit bekannten Verfahren beruhen auf der kathodischen Reduktion von Sauerstoff und Verwendung von Alkalihydroxid als Elektrolyt. Erhalten werden alkalische Wasserstoffperoxidlösungen, wobei das Molverhältnis von beispielsweise NaOH zu Wasserstoffperoxid im Bereich von 2,3 zu 1 bis etwa 1 zu 1 liegt. Eine Übersicht über die derzeit bekannten Verfahren vermitteln P.C. Foller und R.T. Bombard in Journal of Applied Electrochemistry 25 (1995), 613-627. Die Firma Dow Chemical Co. betreibt beispielsweise eine Rieselbettzelle mit einem kathodisch angeordneten Rieselbett, wobei die Partikel des Rieselbetts aus Graphitpartikeln mit einer Umhüllung aus Polytetrafluorethylen und Ruß bestehen. Dieses Verfahren arbeitet bei Raumtemperatur und Normaldruck, und der Katholyt-Fluss wird durch den Anolyten über ein Diaphragma gesteuert. Als Anode dient platiniertes Titan. Als Elektrolyt wird eine molare Natronlauge eingesetzt. Nachteilig an diesem Verfahren ist es, dass es nur mit niedriger Stromdichte betrieben werden kann, wodurch die Investitionskosten einer solchen Anlage hoch sind. Mit zunehmender Stromdichte nimmt die Stromausbeute stark ab.

Bekannt sind auch elektrochemische Prozesse, in welchen alkalisches Wasserstoffperoxid unter Verwendung ebener Kathoden in Membran-geteilten Elektrolysezellen, wobei es sich bei der Membran um perfluorierte Sulfonsäuremembranen handelt, hergestellt werden kann.

Bei einem weiteren Verfahren erfolgt die Elektrolyse in einer Elektrolysezelle, wobei die Kathode als Sauerstoffdiffusionselektrode und die Anode als Sauerstoff entwickelnde Metallelektrode oder als Wasserstoffdiffusionselektrode ausgebildet sind. Katholyt ist in diesem Verfahren Wasser, Anolyt eine schwefelsaure Natriumsulfatlösung; Reaktionsprodukt ist eine alkalische Wasserstoffperoxidlösung - siehe DE 195 16 304.

Ein entscheidender Nachteil der zuvor gewürdigten Verfahren, ist der Gehalt an Alkali im gebildeten alkalischen Wasserstoffperoxid. Dieser Alkaligehalt ist für manche Anwendungsbereiche unerwünscht, und zudem vermindert es die Stabilität des Wasserstoffperoxids.

P. Tatapudi und J.M. Fenton lehren in J. Electrochem. Soc. Vol. 141, Nr. 5, (1994), 1174-1178 ein Verfahren zur gleichzeitigen Synthese von Ozon und Wasserstoffperoxid in einem eine Protonenaustauschmembran enthaltenden elektrochemischen Reaktor. Mit einer Stromausbeute von 4,5 % wird an der Anode Ozon und mit einer Stromausbeute von 0,8 % an der Kathode Wasserstoffperoxid gewonnen. Letzteres in einer Konzentration im Bereich von 3 bis 5 mg/l. Das genannte Ergebnis wurde in einem Durchflussreaktor mit einer Kationenaustauschermembran (Nafion® 117 der Fa. DuPont) gewonnen; die Kathode bestand im wesentlichen aus aktiviertem Kohlenstoff, Graphit und Goldpulver und enthielt als Bindemittel polymeres Tetrafluorethylen; die Anode enthielt als katalytisch wirksames Material Bleidioxid. Nachteilig an diesem Verfahren sind einerseits die sehr geringen Stromausbeuten sowie die Bildung von Ozon neben Wasserstoffperoxid. Das Dokument gibt keine Anregung, durch welche Maßnahmen die Stromausbeute und die H₂O₂-Konzentration signifikant gesteigert werden könnten, um das Verfahren technisch nutzbar zu machen.

Wie aus der Publikation von Steven P. Webb und James A. McIntyre in The Electrochemical Society Proceedings, Vol. 95-26, 198-208 hervorgeht, lässt sich alkalifreies Wasserstoffperoxid auf elektrochemischen Wege dadurch gewinnen, dass man als Elektrolysezelle eine Brennstoffzelle verwendet. Eine solche Zelle enthält eine Membran-Elektroden-Einheit (MEA), welche eine Membran auf der Basis eines Sulfonsäuregruppen enthaltenden perfluorierten Polymers oder Copolymers enthält, deren eine Seite unmittelbar in Kontakt mit einer Anodenschicht und deren gegenüberliegende andere Seite mit einer Kathodenschicht steht. Auf den Elektrodenschichten befindet sich eine Diffusorschicht (Backing) aus einem kohlenstoffhaltigen flächigen Material. Die elektrokatalytisch wirksame Anodenschicht enthält ein Bindemittel auf der Basis eines perfluorierten Polymers oder Copolymers und eine katalytisch wirksame Komponente, welche in diesem Fall vorzugsweise ein Edelmetall, wie insbesondere Gold, oder ein Metalloxid, wie insbesondere Zinkoxid oder ein Lanthanidenmetalloxid, auf einem kohlenstoffhaltigen Trägermaterial umfasst. Zur Durchführung der Elektrolyse wird dem Anodenraum Wasserstoff und dem Kathodenraum Sauerstoff zugeführt. Zur Erhöhung der Selektivität des eingesetzten Wasserstoffs wird der Sauerstoff befeuchtet. Nach diesem Verfahren lassen sich alkalifreie wässrige Wasserstoffperoxidlösungen mit einem Gehalt über 1 % mit einer Selektivität im Bereich von 20 bis 70 % gewinnen. Zweckmäßigerweise wird die Elektrolyse bei hohem Druck und niedriger Temperatur durchgeführt. Die zuvor gewürdigte Publikation wird vollständig in die Offenbarung der vorliegenden Anmeldung einbezogen.

Aufgabe der Erfindung ist es, ein verbessertes Verfahren zur Herstellung von Wasserstoffperoxid durch elektrochemische Umsetzung von Sauerstoff und Wasserstoff in einer Brennstoffzelle bereitzustellen. Es sollte ein Weg aufgezeigt werden, wodurch die Konzentration der an der Kathode gewonnenen wässrigen Wasserstoffperoxidlösung gesteuert beziehungsweise erhöht werden kann.

Es wurde gefunden, dass die Konzentration der wässrigen Wasserstoffperoxidlösung mit zunehmender Dicke der Membran stark ansteigt. Gefunden wurde demgemäß ein Verfahren zur elektrochemischen Herstellung von Wasserstoffperoxid, insbesondere einer wässrigen Wasserstoffperoxidlösung, umfassend kathodische Reduktion von Sauerstoff und anodische Oxidation von Wasserstoff in einer mit einer Membran-Elektroden-Einheit (MEA), deren Membran im wesentlichen aus einem Sulfonsäuregruppen enthaltenden fluorierten Polymer oder Copolymer besteht, ausgestatteten Brennstoffzelle und Abziehen der Reaktionsprodukte und nicht umgesetzten Gase, das dadurch gekennzeichnet ist, dass man eine Membran mit einer Dicke im Bereich von größer 150 µm bis 300 µm einsetzt. Die Unteransprüche richten sich auf bevorzugte Ausführungsformen des Verfahrens.

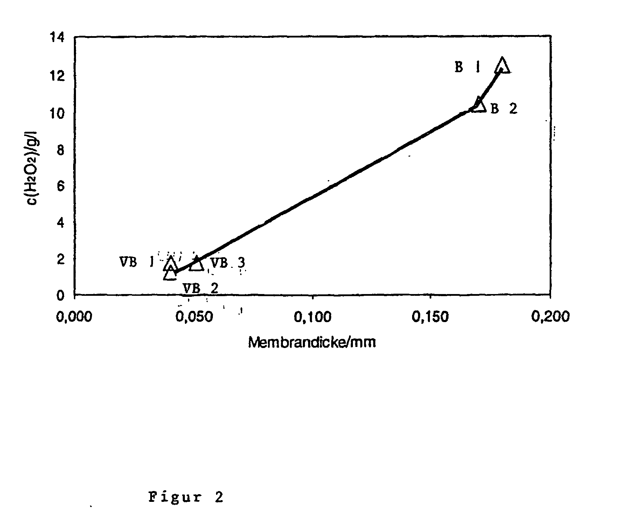

Es war nicht vorhersehbar, dass mit zunehmender Membrandicke die H₂O₂-Konzentration zunimmt. Gemäß einer bevorzugten Ausführungsform weist die Membran eine Dicke im Bereich von 150 bis 250 µm, auf. Der aussergewöhnliche Effekt wird in Figur 2 verdeutlicht. Der prinzipielle Aufbau der Brennstoffzelle, welche als Durchflusszelle konzipiert ist, und wobei eine Vielzahl von Zellen sandwichartig zusammengefasst werden kann, ist an sich bekannt - beispielhaft wird auf das zuvor gewürdigte Dokument von S.P. Webb et al. und die darin zitierten Dokumente verwiesen. Die Zelle umfasst somit in symmetrischer Anordnung zu beiden Seiten einer Membran-Elektroden-Einheit je einen Diffusor aus einem kohlenstoffhaltigen porösen Material und je eine Endplatte aus üblicherweise Graphit. Die genannten Elemente stehen miteinander in engem elektrischem Kontakt. Dem Diffusor kommt zusätzlich zur Funktion einer guten Kontaktierung auch die Funktion einer gleichmäßigen Verteilung der Edukte zu. Gemäß einer besonderen Ausführung weisen die Elektrodenendplatten parallele, mäanderförmige oder anders geformte Kanäle auf - erhältlich beispielsweise durch ein Stollenprofil der Endplatte. Diese Kanäle sind im Hinblick auf eine störungsfreie, d.h., ohne Flutung erfolgende. Abführung des im elektrochemischen Prozess gebildeten Wassers und Wasserstoffperoxids sowie des durch die Befeuchtung des Sauerstoffs und/oder Wasserstoffs eingebrachten Wassers zweckmäßig.

Bei der kationenaustauschenden Polymerelektrolytmembran handelt es sich um eine fluorierte Ionenaustauschermembran vom Kationentyp, vorzugsweise um Fluor- oder Perfluorpolymere, insbesondere Copolymere von zwei oder mehr Fluor- oder Perfluormonomeren, wovon mindestens eines der Polymeren Sulfonsäuregruppen aufweist. Solche Membranen sind mit unterschiedlichem Äquivalentgewicht und unterschiedlicher Dicke im Handel erhältlich. Das eingangs gewürdigte Dokument von S.P. Webb et al. gibt keine Hinweise zur Dicke der Membran. Im Verfahren zur gleichzeitigen Bildung von Ozon und Wasserstoffperoxid des gleichfalls gewürdigten Dokuments von P. Tatapudi et al. wird mit der Kationenaustauschermembran Nafion® 117 der Fa. DuPont eine Membran mit einer Dicke von etwa 180 µm eingesetzt. Da es sich bei diesem Verfahren aber um ein völlig andersartiges elektrochemisches Verfahren handelt, legt dieses Dokument nicht nahe, eine solche Membran auch im erfindungsgemäßen Verfahren zu verwenden.

Bei den Elektrodenschichten handelt es sich um dünne filmförmige Schichten, welche in einem fluorhaltigen polymeren Bindemittel ein Gemisch aus einem Metall oder Metalloxid und Ruß oder vorzugsweise ein mit einem Metall oder Metalloxid beschichteten Ruß enthalten. Gemäß einer bevorzugten Ausführungsform wird jede Elektrodenschicht zunächst auf eine Seite des jeweiligen makroporösen Diffusors auf der Basis eines Kohlenstoffmaterials aufgebracht und der so beschichtete Diffusor dann auf die Membran aufgepresst. Gemäß einer bevorzugten Ausführungsform enthält die Elektrodenschicht als Bindemittel ein Sulfonsäuregruppen enthaltendes perfluoriertes Polymer oder Copolymer. Anstelle eines Sulfonsäuregruppen enthaltenden Polymers können auch andere durch beispielsweise Pfropfpolymerisation gewonnene perfluorierte Polymere mit anderen hydrophilen Seitengruppen eingesetzt werden. Die Verwendung eines hydrophiles Seitengruppen enthaltenden perfluorierten Polymers oder Copolymers als Bindemittel in den Elektrodenschichten ist gegenüber der Verwendung von Polytetrafluorethylen vorteilhaft, da auf diese Weise die Katalysatorschicht auch mit dem bei der Reaktion eingebrachten und/oder gebildeten Wasser in Kontakt treten kann und Benetzungsprobleme damit minimiert werden.

Vorzugsweise enthält die Kathode trägergebundenes Gold oder Metalloxid, wie insbesondere Zinkoxid, wobei es sich bei dem Träger um Ruß handelt. Als Anode eignet sich bei der elektrochemischen Erzeugung von Wasserstoffperoxid aus Sauerstoff und Wasserstoff in einer Brennstoffzelle eine Kombination aus im wesentlichen einem mit Platin beschichteten Ruß und Polytetrafluorethylen, vorzugsweise ein Sulfonsäuregruppen enthaltendes perfluoriertes Polymer oder Copolymer als Bindemittel.

Figur 1 zeigt das Schema einer Vorrichtung zur elektrochemischen Erzeugung von Wasserstoffperoxid.

Figur 2 zeigt.ein Diagramm, woraus die Abhängigkeit der Konzentration der wässrigen Wasserstoffperoxidlösung von der Membrandicke hervorgeht.

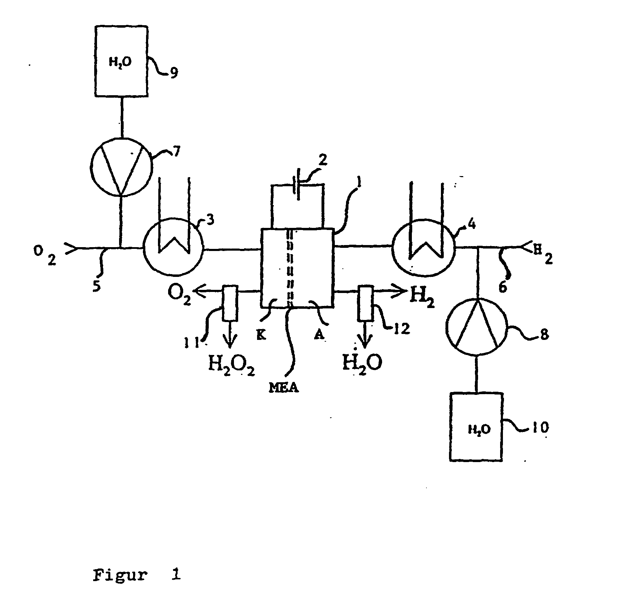

Figur 1 zeigt ein Schema einer Vorrichtung zur elektrochemischen Herstellung einer wässrigen Wasserstoffperoxidlösung aus Sauerstoff und Wasserstoff. Bei der Elektrolysezelle (1) handelt es sich um eine typische Brennstoffzelle, deren Aufbau der Fachwelt bekannt ist; mit K ist der Kathodenraum, mit A der Anodenraum und mit MEA eine Membran-Elektroden-Einheit angedeutet. Kathode und Anode werden mit einer Stromquelle (2) verbunden. Dem Kathodenraum werden über die Leitung (5) Sauerstoff, dem Anodenraum über die Leitung (6) Wasserstoff zugeführt. Aus einem Wasservorratsbehälter (9) wird Wasser mittels einer Hochdruckpumpe oder einer anderen Vorrichtung, beispielsweise einem Vernebler in die Leitung (5) eingebracht; im Wärmetauscher (3) wird das Sauerstoff-Wasserdampfgemisch auf die gewünschte Reaktionstemperatur gebracht. In analoger Weise lässt sich der Wasserstoffstrom in Leitung (6) mit Wasser befeuchten, wobei Wasser aus einem Vorratsbehälter (10) über eine Hochdruckpumpe oder Vernebler oder dergleichen eingebracht und das Gas-Wasser-Gemisch in einem weiteren Wärmetauscher (4) auf die gewünschte Temperatur gebracht wird. Die aus der Brennstoffzelle austretenden Produktströme enthalten kathodenseitig wässriges Wasserstoffperoxid und nicht umgesetzten Sauerstoff und anodenseitig Wasser und nicht umgesetzten Wasserstoff. Die produzierten Gas-Flüssig-Gemische lassen sich in einer Trennvorrichtung (11 bzw. 12) trennen. Besonders durch Einspeisen von Wasserdampf mit einer Temperatur von 180 °C in den O₂-Strom kann die H₂O₂-Konzentration gesteigert werden.

Figur 2 zeigt die Abhängigkeit der Konzentration von Wasserstoffperoxid in g/l von der Membrandicke. Bei den Vergleichsbeispielen VB1 bis VB3 handelt es sich um Versuche, in welchen jeweils eine handelsübliche Membran verschiedener Hersteller zum Einsatz kam, deren Dicke im Bereich von 40 bis 50 µm lag. In den erfindungsgemäßen Beispielen B1 und B2 betrug die Membrandicke demgegenüber 180 bzw. 170 µm. Die H₂O₂-Konzentration konnte durch die in der Figur dargestellte Steigerung der Membrandicke um ein Vielfaches gesteigert werden. Das erfindungsgemäße Verfahren lässt sich bei normaler oder erhöhter Temperatur durchführen. Auch durch eine Druckerhöhung lässt sich die H₂O₂-Konzentration erhöhen. Bei einem Druck von etwa 30 bar lässt sich die H₂O₂-Konzentration auf weit über 10 Gew.-% steigern. In den Vergleichsbeispielen und Beispielen wurden die nachfolgenden handelsüblichen Membranen verwendet: VB1: Nafion® 112, VB2: Gore 40 µm, VB3: PallR1010; B1: Nafion® 117, B2: PallBCM4010.

Durch Verwendung einer erfindungsgemäßen dicken Membran in der MEA der Brennstoffzelle lässt sich bei gegebenen Betriebsbedingungen, wie Druck, Temperatur, Stromdichte und Grad der Befeuchtung, eine wesentlich höhere H₂O₂-Konzentration erhalten als unter Verwendung einer dünnen Membran.

## Patentansprüche

1. Verfahren zur elektrochemischen Herstellung von Wasserstoffperoxid, insbesondere einer wässrigen Wasserstoffperoxidlösung, umfassend kathodische Reduktion von Sauerstoff und anodische Oxidation von Wasserstoff in einer mit einer Membran-Elektroden-Einheit (MEA), deren Membran im wesentlichen aus einem Sulfonsäuregruppen enthaltenden fluorierten Polymer oder Copolymer besteht, ausgestatteten Brennstoffzelle und Abziehen der Reaktionsprodukte und nicht umgesetzten Gase,
**dadurch gekennzeichnet,**
**dass** man eine Membran mit einer Dicke im Bereich von 150 µm bis 300 µm einsetzt.

2. Verfahren nach Anspruch 1,
**dadurch gekennzeichnet,**
**dass** man eine Membran mit einer Dicke im Bereich von 150 µm bis 250 µm, einsetzt.

3. Verfahren nach Anspruch 1 oder 2,
**dadurch gekennzeichnet,**
**dass** man eine MEA einsetzt, deren Kathode im wesentlichen aus einem Metall oder Metalloxid, Ruß und einem perfluorierten Polymer oder Copolymer besteht.

4. Verfahren nach Anspruch 3,
**dadurch gekennzeichnet,**
**dass** die Kathode als Metalloxid Zinkoxid und als Bindemittel ein Sulfonsäuregruppen enthaltendes perfluoriertes Polymer oder Copolymer enthält.

5. Verfahren nach einem der Ansprüche 1 bis 4,
**dadurch gekennzeichnet,**
**dass** man eine MEA einsetzt, deren Anode im wesentlichen aus Platin, Ruß und einem perfluorierten Polymer oder Copolymer besteht.

6. Verfahren nach einem der Ansprüche 1 bis 5,
**dadurch gekennzeichnet,**
**dass** man die Brennstoffzelle mit einer Stromdichte im Bereich von 50 bis 500 mA/cm² betreibt.

7. Verfahren nach einem der Ansprüche 1 bis 6,
**dadurch gekennzeichnet,**
**dass** man den Sauerstoff und/oder Wasserstoff vor dem Eintritt in die Brennstoffzelle mit Wasserdampf befeuchtet.

8. Verfahren nach einem der Ansprüche 1 bis 7,
**dadurch gekennzeichnet,**
**dass** man die Brennstoffzelle bei einem Druck im Bereich von 2 bis 40 bar, insbesondere 2 bis 15 bar, betreibt.

## Claims

1. A process for the electrochemical preparation of hydrogen peroxide, in particular an aqueous hydrogen peroxide solution, comprising the cathodic reduction of oxygen and anodic oxidation of hydrogen in a fuel cell fitted with a membrane electrode unit (MEU), the membrane in which consists substantially of a sulfonic acid group-containing fluorinated polymer or copolymer, and removing the reaction products and unreacted gases,
**characterised in that**
a membrane with a thickness in the range 150 µm to 300 µm is used.

2. A process according to claim 1,
**characterised in that**
a membrane with a thickness in the range 150 µm to 250 µm is used.

3. A process according to claim 1 or 2,
**characterised in that**
a MEU is used in which the cathode consists substantially of a metal or metal oxide, carbon black and a perfluorinated polymer or copolymer.

4. A process according to claim 3,
**characterised in that**
the cathode contains zinc oxide as a metal oxide and a sulfonic acid group-containing perfluorinated polymer or copolymer as binder.

5. A process according to one of claims 1 to 4,
**characterised in that**
a MEU is used in which the anode consists substantially of platinum, carbon black and a perfluorinated polymer or copolymer.

6. A process according to one of claims 1 to 5,
**characterised in that**
the fuel cell is operated with a current density in the range 50 to 500 mA/cm².

7. A process according to one of claims 1 to 6,
**characterised in that**
the oxygen and/or hydrogen is moistened with water vapour prior to entering the fuel cell.

8. A process according to one of claims 1 to 7,
**characterised in that**
the fuel cell is operated at a pressure in the range 2 to 40 bar, in particular 2 to 15 bar.

## Revendications

1. Procédé de production électrochimique de peroxyde d'hydrogène, en particulier d'une solution de peroxyde d'hydrogène, comprenant une réduction cathodique d'oxygène et une oxydation anodique d'hydrogène dans une pile à combustible équipée d'une unité membrane/électrodes (MEA) dont la membrane est essentiellement constituée d'un polymère ou copolymère fluoré contenant des groupes acide sulfonique, et un retrait des produits de la réaction et des gaz non convertis,
**caractérisé en ce qu'**
on utilise une membrane d'une épaisseur de l'ordre de 150 µm à 300 µm.

2. Procédé selon la revendication 1,
**caractérisé en ce qu'**
on utilise une membrane d'une épaisseur de l'ordre de 150 µm à 250 µm.

3. Procédé selon la revendication 1 ou 2,
**caractérisé en ce qu'**
on utilise une MEA dont la cathode est essentiellement constituée d'un métal ou d'un oxyde métallique, de noir de carbone et d'un polymère ou copolymère perfluoré.

4. Procédé selon la revendication 3,
**caractérisé en ce que**
la cathode contient de l'oxyde de zinc en tant qu'oxyde métallique et un polymère ou copolymère perfluoré renfermant des groupes acide sulfonique en tant que liant.

5. Procédé selon l'une quelconque des revendications 1 à 4,
**caractérisé en ce qu'**
on utilise une MEA dont l'anode est essentiellement constituée de platine, de noir de carbone et d'un polymère ou copolymère perfluoré.

6. Procédé selon l'une quelconque des revendications 1 à 5,
**caractérisé en ce qu'**
on fait fonctionner la pile à combustible avec une densité de courant de l'ordre de 50 à 500 mA/cm².

7. Procédé selon l'une quelconque des revendications 1 à 6,
**caractérisé en ce qu'**
on humidifie l'oxygène et/ou l'hydrogène avec de la vapeur d'eau avant l'entrée dans la pile à combustible.

8. Procédé selon l'une quelconque des revendications 1 à 7,
**caractérisé en ce qu'**
on fait fonctionner la pile à combustible à une pression de l'ordre de 2 à 40 bars, en particulier de 2 à 15 bars.
